Europäisches Patentamt

**European Patent Office**

**Office européen des brevets**

(19)

(11) Publication number: **0 662 396 A1**

(12) **EUROPEAN PATENT APPLICATION**

(21) Application number: **94203498.4**

(22) Date of filing: **01.12.94**

(51) Int. Cl.6: **B60C 1/00**, B60C 11/00, B60C 11/18

(30) Priority: **13.12.93 US 165621**

(43) Date of publication of application:
**12.07.95 Bulletin 95/28**

(84) Designated Contracting States:
**DE ES FR GB IT NL**

(71) Applicant: **THE GOODYEAR TIRE & RUBBER COMPANY**
**1144 East Market Street**
**Akron, Ohio 44316-0001 (US)**

(72) Inventor: **Paulin, Kenneth Harvey**
**1098 Lookout Street**
**Uniontown, OH 44685 (US)**
Inventor: **Carncross, Robert Ross**
**40, Rue Charles Ouint**
**L-2380 Luxembourg-Merl (LU)**

(74) Representative: **Leitz, Paul**
**Goodyear Technical Center,**
**Patent Department,**
**Avenue Gordon Smith**
**L-7750 Colmar-Berg (LU)**

(54) **Pneumatic radial medium truck tire having a tread cap constructed of at least two kinds of rubber.**

(57) The present invention relates to a pneumatic radial medium truck tire having a tread cap constructed of at least two kinds of rubbers. Each of the two shoulder areas (30,32) of the tread cap has a pressure distribution groove and is comprised of a rubber compound exhibiting a tear strength value of at least 140 KNm$^{-1}$ as measured by ASTM D624 Die "B". The central portion (34) of the tread cap located between the two shoulder areas exhibits a Healy Rebound of at least 74 percent as measured by ASTM D1054.

FIG-1

EP 0 662 396 A1

EP 0 662 396 A1

1. Background of the Invention

The present invention relates to a tread for a pneumatic radial medium truck tire. Pneumatic tires are a laminated mechanical device of generally toroidal shape having beads and a tread and made of rubber, chemicals, fabric and steel or other materials. When mounted on the wheel of the motor vehicle, the tire through its tread provides traction and contains the fluid that sustains the vehicle load. In particular, the tread of the present invention is particularly suited for a radial-ply tire for medium trucks. The term "radial-ply" tire is intended to include a belted or circumferentially-restricted pneumatic tire in which the ply cords which extend from bead to bead are laid at cord angles between 65° and 90° with respect to the equatorial plane of the tire.

2. Shoulder wear is a common problem in many tires and especially radial tires for trucks and buses having rib and/or rib-block tread patterns. Shoulder wear is induced by lateral force and uneven foot print pressure. Once the partial wear starts, it extends unevenly in the axially direction between the tread crown and shoulder region. The partial wear gross in the axial direction is carved by the slippage produced during a straight driving of the vehicle due to a difference in radius between the tread crown and the shoulder regions. One approach to diminish the problem of shoulder wear is to use a circumferential groove, commonly known as a decoupling groove or pressure distribution groove (PDG), on each shoulder rib or region. The purpose of this groove is to optimize the tire tread footprint pressure so as to prevent tread scrubbing on the road or highway surface. The groove inhibits the partial wear from growing axially inward, however, the region of the shoulder rib between the groove and the nearest tread edge is more likely to tear during use. Tires with a PDG require high tear strength tread compounds. However, such compounds inherently tend to have an adverse effect on tire rolling resistance and subsequent truck fuel economy. It goes without saying that tires which further improve fuel economy are needed and, therefore, a dichotomy exits to the designer of a tire with a PDG as to whether one desires a more fuel efficient tire or one that exhibits sufficient tear strength to avoid tearing of the shoulder rib between the groove and the nearest tread edge.

3. Summary of the Invention

The present invention relates to a pneumatic tire for a medium truck wherein the tread has (a) a base layer of a first rubber compound, and (b) a cap layer which includes a pair of ground contacting shoulder regions and a central ground contacting region located between said pair of shoulder regions. Each ground contacting shoulder region has a pressure distribution groove which is circumferentially extending about the ground contact portion of the shoulder region and the shoulder region being of a second rubber composition with the central ground contacting region being composed of a third rubber compound. The second rubber compound which is located in the shoulder region requires a tear strength value of at least 140 KNm$^{-1}$ as measured by ASTM D624 Die "B" and is greater than the tear strength value of the third rubber compound located in the central portion of the tread cap. In addition, the third rubber compound which is located in the central portion of the tread cap exhibits a Healy Rebound value at 100°C of at least 74 percent as measured by ASTM D1054 which is higher than the Healy Rebound value of the second rubber compound located in the shoulder region of the tread cap.

4. Description of the Drawing

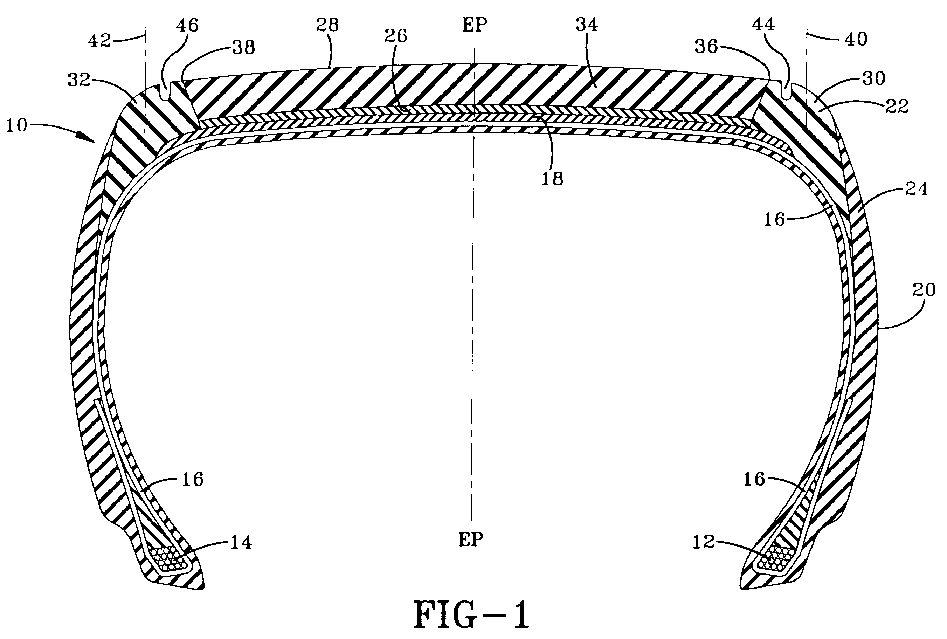

**Fig. 1** is a sectioned axially view of a radial ply medium truck tire according to the present invention.

5. Detailed Description of the Invention

There is disclosed a pneumatic radial medium tire for a truck comprising:

(1) a pair of axially spaced apart beads;

(2) a radial ply carcass;

(3) a belt structure comprising a plurality of belt plies;

(4) a tread having

(a) a base layer of a first rubber compound,

(b) a cap layer which includes a pair of ground contacting shoulder regions and a central ground contacting region located between said pair of shoulder regions,

- each said ground contacting shoulder region having a pressure distribution groove which is circumferentially extending about the ground contacting portion of said shoulder region,

- each said ground contacting shoulder region being composed of a second rubber compound,

- said central ground contacting region being composed of a third rubber compound,

- each said central ground contacting region having a width in the axial direction ranging from about 82 percent to 98 percent of the tread width,

- wherein said second rubber compound has a tear strength value of at least 140 KNm$^{-1}$ as measured by ASTM D624 Die "B" and said tear strength value for said second rubber compound is higher than the tear strength value of said third rubber compound, and

2

- wherein said third rubber compound exhibits a Healy Rebound value at 100 °C of at least 74 percent as measured by ASTM D1054 at 100 °C and said Healy Rebound value is higher than the Healy Rebound value of said second rubber compound.

6. The present invention may be better understood in the context of the following definitions which are applicable both to the specification and to the appended claims:

7. "Air-impermeable rubber" means a rubber having an air-permeability less than 40% the air permeability of natural rubber. "Air-permeable rubber" means any rubber that is not air-impermeable. Both air-impermeable and air-permeable rubbers can be reinforced.

8. "Aspect ratio" of the tire means the ratio of its section height to its section width.

9. "Axial" and "axially" are used herein to refer to lines or directions that are parallel to the axis of rotation of the tire.

10. "Bead" means that part of the tire comprising an annular tensile member wrapped by ply cords and shaped.

11. "Belt structure" means at least two layers or plies of parallel cords, woven or unwoven, underlying the tread, unanchored to the bead, and having both left and right cord angles in the range from 17 degrees to 27 degrees with respect to the equatorial plane of the dire.

12. "Butyl rubber" means rubber produced by copolymerizing isobutylene with small amounts of isoprene.

13. "Compensated tread width" means the tread width multiplied by the aspect ratio.

14. "Carcass" means the tire structure apart from the belt structure, tread, undertread, and sidewall rubber over the plies, but including the beads.

15. "Circumferential line" means a line tangent to the circle defined by a bead of the tire.

16. "Cord" means one of the reinforcement strands of which the plies in the tire are comprised.

17. "Cord angle", for a cord that crosses the equatorial plane, means the acute angle, left or right in a plan view of the tire, formed by a cord with respect to the equatorial plane. If the cord does not cross the equatorial plane, the "cord angle" means the acute angle formed by the cord with a circumferential line (circle) in the ply. The circumferential line passes through the point at which the "cord angle" is to be measured and is contained in a plane parallel with the equatorial plane. The "left" or "right" orientation of a cord not passing through the equatorial plane is determined by what the orientation would be were the cord to extend across such angle while remaining in the tire. The "cord angle" is measured in a cured but uninflated tire.

18. "Equatorial plane (EP)" means the plane perpendicular to the tire's axis of rotation and passing through the center of its tread.

19. "Footprint" means the contact patch or area of contact of the tire tread with a flat surface at zero speed and under normal load and pressure.

20. "Groove" means an elongated void area in a tread that may extend circumferentially or laterally about the tread in a straight, curved, or zig-zag manner. Circumferentially and laterally extending grooves sometimes have common portions and may be subclassified as "wide", "narrow", or "slot". The slot typically is formed by steel blades inserted into a cast or machined mold or tread ring therefor. In the appended drawings, slots are illustrated by single lines because they are so narrow. A "slot" is a groove having a width in the range from about 0.2% to 0.8% of the compensated tread width, whereas a "narrow groove" has a width in the range from about 0.8% to 3% of the compensated tread width and a "wide groove" has a width greater than 3% thereof. The "groove width" is equal to tread surface area occupied by a groove or groove portion, the width of which is in question, divided by the length of such groove or groove portion; thus, the groove width is its average width over its length. Grooves, as well as other voids, reduce the stiffness of the tread regions in which they are located. Slots often are used for this purpose, as are laterally extending narrow or wide grooves. Grooves may be of varying depths in a tire. The depth of a groove may vary around the circumference of the tread, or the depth of one groove may be constant but vary from the depth of another groove in the tire. If such narrow or wide grooves are of substantially reduced depth as compared to wide circumferential grooves which they interconnect, they are regarded as forming "tie bars" tending to maintain a rib-like character in the tread region involved.

21. "Halobutyl rubber" means halogenated (chlorine or bromine) butyl rubber.

22. "Lugs" refers to discontinuous radial rows of tread rubber in direct contact with the road surface.

23. "Medium truck tire" refers to a pneumatic tire having a section width ranging from 22.86 cm (9 inches) to 45.72 cm (18 inches) and designed for use on a rim having a diameter ranging from 49.53 cm (19.5 inches) to 62.23 cm (24.5 inches).

24. "Normal load" refers to the specific design inflation pressure and load assigned by the appropriate standards organization for the service condition of the tire.

25. "Ply", unless otherwise specified, means a continuous layer of rubber-coated parallel cords.

26. "Pneumatic tire" beans a laminated mechanical device of generally toroidal shape (usually an open-torus) having beads and a tread and made of rubber, chemicals, fabric and steel or other materials. When mounted on the wheel of a motor vehicle, the tire through its tread provides traction and contains the fluid that sustains the vehicle load.

27. "Radial" and "radially" are used to mean directions radially toward or away from the axis of rotation of the tire.

28. "Radial-ply tire" means a belted or circumferentially-restricted pneumatic tire in which the ply cords which extend from bead to bead are laid at cord angles between 65° and 90° with respect to the equatorial plane of the tire.

29. "Rib" means a circumferentially extending strip of rubber on the tread which is defined by at least one circumferential "wide groove" and either a second such groove or a lateral edge of the tread, the strip of rubber being laterally undivided by full-depth narrow or wide grooves.

30. "Section width" means the maximum linear distance parallel to the axis of the tire and between the exterior of its sidewalls and after it has been inflated at normal pressure for 24 hours, but unloaded, excluding elevations of the sidewalls due to labeling, decoration or protective bands.

31. "Sidewall" means that portion of a tire between the tread and the bead.

32. "Tread" means a molded rubber component which when bonded to a tire casing, includes that portion of the tire that comes into contact with the road when the tire is normally inflated and under normal load.

33. "Tread width" means the arc length of the tread surface in the axial direction, that is, in a plane parallel to the axis of rotation of the tire.

34. Referring to Figure 1, there is shown a pneumatic tire 10 having a pair of axially-spaced apart annular tensile members or beads 12, 14. The beads 12, 14 are shown as wire filaments arranged in a diamond-shaped cross-section but this is not believed to be essential to the invention and the beads 12, 14 could have been square, circular or of other well known cross-sections or could be manufactured of cables or other materials.

35. A circumferentially extending radially superimposed carcass ply 16 extends continuously between the beads 12, 14. Steel is the preferred reinforcement for the carcass ply 16. The cords of the carcass ply are oriented at angles between 65° and 90° with respect to the equatorial plane (EP) of the tire. It is contemplated herein that more than one carcass ply may be used. Preferably, the cords in the carcass ply 16 are oriented at 80° to 90° and if a second carcass ply is used, they are also oriented at 80° to 90°.

36. A liner (not shown) may be disposed radially inwardly of the carcass ply 16. The liner is made of an air-impermeable material which offers high resistance to air permeation and can withstand levels of flexing in the sidewall area. The preferred material is halobutyl rubber.

37. The tire of the present invention also has a belt structure 18 which comprises a plurality of belt plies of the type well known in the art. The belt structure 18 is disposed radially outwardly of the carcass ply 16. Each of the belt plies may be of the same construction or combinations of split and full-belt widths may be used. The number of belt plies may vary, however, generally range from 3 to. 4. The belt plies are preferably reinforced with cords made of steel. The cord angles of the cords in the belt ply range from 16° to 28°. Preferably, the cord angle ranges from about 18° to 20°.

38. The sidewalls 20 of the tire 10 include outer elastomeric portions that extend from the tread 22 to the bead portions of the tire. The sidewall 20 is generally unreinforced and is manufactured of a rubber designed to resist chemical reactions with oxygen, ozone and sunlight and must be resilient and flexible to withstand the flexing of the tire 10 under normal operating conditions. Preferably, the sidewall 20 has an overlay region 24 which overlaps a portion of the tread 22.

39. The tread 22 of the pneumatic tire 10 of the present invention is characterized by a base layer 26 of a first rubber compound. The base layer 26 is compounded for resistance against cracking and weathering while maintaining flexibility. The rubber compound of the base 26 does not have to be formulated to resist exposure to elements, sunlight, air, etc. since the base 26 is enclosed by the other components of the tire. This allows for the reduction, if not the complete removal, of the antioxidants and antiozonants from the base compound. However, some small amounts may be added to prevent deterioration due to the processing of the rubber compound. The rubber compound used in the base 26 is formulated to provide for good rolling resistance. In order to accomplish this, the base compound should have a high resilience and low hysteresis. The rubber compound used in the base 26 should have a Healy rebound value at 100°C of from about 75 to about 90 as measured by ASTM D1054. Preferably, the rubber compound for use as the base layer has a Healy rebound value at 100°C of from 85 to 92 percent.

40. The base layer 26 can be in the form of a laminated cushion separately applied to the cap or carcass. Alternatively, the base layer 26 may be coextruded with the cap layer 28. Preferably, the rubber compound used in the base layer 26 has a higher Healy rebound value than the rubber compound used in the central portion. Particularly preferred is when the rubber compound used in the base layer 26 has a Healy rebound value of from 5 to 16 percent higher than the third rubber compound used in the central ground contacting region 34 of the cap layer 28.

41. The tread 22 of the pneumatic tire 10 of the present invention is further characterized by cap layer 28 which includes a pair of ground contacting shoulder regions 30, 32 and a central ground contacting region 34 located between the pair of shoulder regions 30, 32. The interface 36, 38 between the central ground contacting region 34 and the pair of shoulder regions 30, 32 is located a distance from the tread edges 40, 42. The distance from each interface 36, 38 and the closest tread edge 40, 42 ranges from about 2 to 9 percent of the overall distance between the tread edges 40, 42. Therefore, each ground contacting shoulder region 30, 32 has a width in the axial direction ranging from about 2 percent to about 9 percent of the tread width as measured between the tread edges 40, 42. Preferably, each shoulder region has a width in the axial direction ranging from about 4 percent to about 6.5 percent of the tread width.

42. The central ground contacting region 34 has a width in the axial direction ranging from about 82 percent to 96 percent of the tread width as measured between the ground contacting tread edges 40, 42 (arc length). Preferably, the central ground contacting region 34 has a width in the axial direction ranging from about 87 to 92 percent of the overall tread width.

43. Each ground contacting shoulder region 30, 32 has a pressure distribution groove "PDG" 44, 46, which is circumferentially extending about the ground contacting portion of the tread 22. Each PDG has a width ranging from about 0.5 to 1.5 percent of the tread width as measured between the ground contacting tread edges 40, 42 (arc length). Preferably, the width of the PDG ranges from about 0.8 to 1.2 percent. The depth of the PDG may vary. Generally speaking, the PDG should have a depth ranging from about 65 percent to 95 percent of the depth of the central portion of the tread 34 (as measured in a parallel direction).

44. The remaining tread pattern located in the central ground contacting region 34 and ground contacting shoulder regions 30, 32 may comprise, alone or in combination, a plurality of ribs, lugs, wide grooves, narrow grooves or slots.

45. Each ground contacting shoulder region 30, 32 is composed of a second rubber compound. The second rubber compound must exhibit a tear strength value of at least 140 $KNm^{-1}$ as measured by ASTM D 624 Die "B". The tear strength value generally ranges from about 140 $KNm^{-1}$ to 200 $KNm^{-1}$. Preferably, the tear strength value of the second compound ranges from about 145 $KNm^{-1}$ to 165 $KNm^{-1}$. The tear strength value is a measure of the interfacial adhesion between a rubber formulation with itself. The tear strength value of the second compound (located in the shoulder regions) must be a higher value than the tear strength value of the third rubber composition located in the central ground contacting region.

46. The tear strength value for the third rubber compound is generally about 40 $KNm^{-1}$ below or more than that of the second compound. The tear strength value for the third compound ranges from about 70 $KNm^{-1}$ to 100 $KNm^{-1}$. Preferably, the tear strength for the third compound ranges from about 80 to 95 $KNm^{-1}$.

47. The central ground contacting region 34 is composed of a third rubber compound which exhibits a Healy rebound value at 100°C of at least 74 percent as measured by ASTM Test Method D1054. Generally, the Healy rebound rubber for the central ground contacting region ranges from about 74 percent to 95 percent. Preferably, the third rubber compound exhibits a Healy rebound value at 100°C of from 75 percent to 90 percent. Similar to the base, the central ground contacting region should be comprised of a rubber which exhibits a high degree of rolling resistance as measured by the resilience of the portions of the tread. The Healy rebound value at 100°C of the third compound must be a higher value than the Healy rebound value at 100°C of the second compound located in the shoulder areas 30, 32. The Healy rebound at 100°C for the third compound generally ranges from about 5 percent above or greater than that of the second compound. The Healy rebound at 100°C for the second compound generally ranges from about 60 percent to 75 percent. Preferably, the Healy rebound value at 100°C for the second compound ranges from about 65 percent to 72 percent.

48. The sulfur cured rubber compositions for use as the first, second or third compounds contains a natural or synthetic diene derived rubber. Representative of the rubbers include medium vinyl polybutadiene, styrene-butadiene rubber, synthetic cis-1,4-polyisoprene, synthetic 3,4-polyisoprene, natural rubber, cis-polybutadiene, styrene-isoprene rubber, styrene-isoprene-butadiene rubber, acrylonitrile-butadiene rubber and mixtures thereof. Preferably, the rubber is natural rubber, styrene-butadiene rubber os cis-polybutadiene.

49. In addition to the above, the sulfur cured rubber composition may contain conventional additives including reinforcing agents, fillers, peptizing agents, pigments, stearic acid, accelerators, sulfus vulcanizing agents, antiozonants, antioxidents, processing oils, activators, initiators, plasticizers, waxes, prevulcanization inhibitors, extender oils and the like. Representative of reinforcing agents include carbon black, which is typically added in amounts ranging from about 5 to 100 parts by weight based on 100 parts by weight of total rubber (phr). Preferably, carbon black is used in amounts ranging from about 75 to 85 phr. Typical carbon blacks that are used include N110, N121, N220, N231, N234, N242, N293, N299, N326, N330, M332, N339, N343, N347, N351, N358, N375, N472, N539, N550, N660, N683, N754, and N765. Representative of conventional accelerators are amines, guanidines, thioureas, thiols, thiurams, sulfenamides, dithiocarbamates and xanthates which are typically added in amounts of from about 0.2 to about 5 phr. Representative of sulfur vulcanizing agents include element sulfur (free sulfur) or sulfur donating vulcanizing agents, for example, an amine disulfide, polymeric polysulfide or sulfur olefin adducts. The amount of sulfur vulcanizing agent will vary depending on the type of rubber and particular type of sulfur vulcanizing agent but generally range from about 0.1 phr to about 5 phr with a range of from about 0.5 phr to about 2 phr being preferred. Representative of the antidegradants which may be in the rubber composition include microcrystalline was, paraffinic was, monophenols, bisphenols, thiobisphenols, polyphenols, hydroquinone derivatives, phosphites, phosphate blends, thioesters, naphthylamines, diphenol amines a well as other diaryl amine derivatives, para-phenylene diamines, quinolines and blended amines. Antidegradants are generally used in an amount ranging from about 0.1 phr to about 10 phr with a range of from about 4 to 6 phr being preferred. Representative of a peptizing agent that may be used is pentachlorophenol which may be used in an amount ranging from about 0.1 phr to 0.4 phr with a range of from about 0.2 to 0.3 phr being preferred. Representative of processing oils which may be used in the rubber composition of the present invention include activated dithiobisbenzanilide, poly-para-dinitrosobenzene, xylyl mercaptans, aliphatic-naphthenic aromatic resins, polyethylene glycol, petroleum oils, ester plasticizers, vulcanized vegetable oils, pine tar, phenolic resins, petroleum resins, polymeric esters and rosins. These processing oils may be used in a conventional amount ranging from about 0 to about 10 phr with a range of from about 5 to 10 phr being preferred. Representative of an initiators that may be used is stearic acid. Initiators are generally used in a conventional amount ranging from about 1 to 4 phr with a range of from about 2 to 3 phr being preferred.

50. Accelerators may be used in a conventional amount. In cases where only a primary accelerator is used, the amounts range from about 0.5 to 2.5 phr. In cases where combinations of two or more accelerators are used, the primary accelerator is generally used in amounts ranging from 0.5 to 2.0 phr and a secondary accelerator is used in amounts ranging from about 0.1 to 0.5 phr. Combinations of accelerators have been known to produce a synergistic effect. Suitable types of conventional accelerators are amines, disulfides, guanidines, thioureas, thiazoles, thiurams, sulfenamides, dithiocarbamates and xanthates. Preferably, the primary accelerator is a sulfenamide. If a secondary accelerator is used, it is preferably a guanidine, dithiocarbamate or thiuram compound.

51. Example

A suitable rubber composition which may be used in the shoulder ground contacting region may be found in Table I below.

Table I

| SHOULDER COMPOUND | |
|---|---|
| Natural Rubber[1] | 100.0 |
| Carbon Black (N110) | 50.00 |
| Stearic Acid | 2.00 |
| Zinc Oxide | 5.00 |
| Aromatic Oil | 3.00 |
| Polymerized 2,2,4-trimethyl-1,2-dihydroquinoline | 1.00 |
| 6-paraphenylene diamine | 1.50 |
| Microcrystalline Wax | 0.50 |
| Paraffin Wax | 0.50 |
| Sulfur | 1.00 |
| Tertiary butyl benzothiazole sulfenamide | 0.90 |

[1] Standard Malaysian Rubber, Grade 5

A suitable rubber composition for the center ground contacting portion of the tread may be found in Table II below.

Table II

| CENTER TREAD COMPOUND | |
|---|---|
| Natural Rubber[1] | 100.00 |
| Carbon Black (N347) | 49.00 |
| Stearic Acid | 2.00 |
| Zinc Oxide | 5.00 |
| Aromatic Oil | 3.00 |
| Pine Tar | 2.00 |
| Polymerized 2,2,4-trimethyl-1,2-dihydroquinolines | 1.00 |
| 6-paraphenylene diamine | 1.50 |
| Microcrystalline Wax | 0.50 |
| Paraffin Wax | 0.50 |
| Sulfur | 1.25 |
| Tertiary butyl benzothiazole sulfenamide | 1.50 |

[1] Standard Malaysian Rubber, Grade 10

A suitable composition for use in the tread base may be found in Table III below.

Table III

| TREAD BASE COMPOUND | |
|---|---|
| Natural Rubber[1] | 100.0 |
| Peptizer | 0.15 |
| Carbon Black (N550) | 36.00 |
| Stearic Acid | 2.00 |
| Zinc Oxide | 10.00 |
| Pine Tar | 2.00 |
| Tackifying Resin | 2.00 |
| Polymerized 2,2,4-trimethyl-1,2-dihydroquinoline | 1.00 |
| 6-paraphenylene diamine | 1.50 |
| Sulfur | 2.50 |
| Tertiary butyl benzothiazole sulfenamide | 1.00 |

[1] Standard Malaysian Rubber, Grade 20

52. The predicted tire test data is that which would be expected from radial truck tires size 11R24.5, tested under a load of typically 5000 lbs. and running under highway conditions. Test tires are normally tested for tread wear under highway service, tread damage resistance, fast tread wearing conditions, such as in city stop/start service, wet and dry traction performance and rolling resistance.

53. Use of a dual tread cap on a truck tire running under such testing conditions will allow:
- 10% improvement in tire rolling resistance over a high tear strength tread across all of tire,
- equal tread wear performance,
- maintenance of tread damage resistance,
- maintenance of traction performance.

54. Table IV describes physical properties for the compounds used in a dual tread compound described in this invention. Table V describes the tire test data for a tire having a dual tread compound versus a tire having a single tread cap compound. The tread base compound of Table III was used in both tires.

Table IV

| TIRE TREAD COMPOUND PHYSICAL PROPERTIES | | | |
|---|---|---|---|
| Compound | 1 High Tear Shoulder | 2 Low Hysteresis Center | 3 Base |
| Tensile Strength | 29.0 | 25.00 | 27.0 |
| Elongation | 550 | 520 | 550 |
| Tan Delta (0°C) | 0.121 | 0.110 | 0.110 |
| Tan Delta (60°C) | 0.100 | 0.090 | 0.075 |
| Tear Strength (KN/m$^{-1}$) | 147 | 95 | 70 |
| Healy Rebound at 100°C (%) | 69 | 75 | 91 |

Table V

| TIRE PERFORMANCE | | |
|---|---|---|
| Compound | 1 | 2 |
| Tread | Single Compound Tread[1] | Dual Compound Tread[2] |
| Tire running temperature (See Note 1) | 100 | 110 |
| Rolling Resistance (See Note 2) | 100 | 115 |
| Wet Skid | 100 | 100 |
| Wet Traction | 100 | 100 |
| Global Tread Wear (See Note 3) | 100 | 100 |
| Evenness of Wear (See Note 4) | 100 | 100 |
| Fast Tread Wear (See Note 5) | 100 | 100 |
| Damage Resistance (See Note 6) | 100 | 100 |

NOTE:

1) Tire running temperature is the tread temperature measured while the tire is at 35 mph with an infrared pyrometer. A higher rating is a lower temperature and is better.

2) Rolling resistance or tire drag rating (higher is better).

3) Global tread wear is the remaining tire tread depth after a defined duration in highway service, typically 60,000 miles. A higher rating is better.

4) Evenness of wear is the standard deviation of tread non-skid or remaining tread depth expressed as a rating (higher is better).

[1]    Rubber Compound of Table I.

[2]    Rubber Compound of Table II.

5) Fast wear performance is the rate of wear under severe conditions and simulates city stop-start conditions.

6) Shoulder damage resistance is a measure of the resistance to chipping, chunking and cutting after running for a defined distance and duration, typically 8,000 miles, on a gravel road.

**Claims**

1. A pneumatic radial medium truck tire characterized by:
   (1) a pair of axially spaced apart beads;
   (2) a radial ply carcass;
   (3) a belt structure comprising a plurality of belt plies;
   (4) a tread having
      (a) a base layer of a first rubber compound,
      (b) a cap layer which includes a pair of ground contacting shoulder regions and a central ground contacting region located between said pair of shoulder regions,
      - each said ground contacting shoulder region having a pressure distribution groove which is circumferentially extending about the ground contacting portion of said shoulder region,
      - each said ground contacting shoulder region being composed of a second rubber compound,
      - each said central ground contacting region having a width in the axial direction ranging from 82 percent to 96 percent of the tread width,
      - said central ground contacting region being composed of a third rubber compound,
      - wherein said second rubber compound has a tear strength value of at least 140 $KNm^{-1}$ as measured by ASTM D 624 Die "B" and said tear strength value is higher than the tear strength value of said third rubber compound, and
      - wherein said third rubber compound exhibits a Healy rebound value at 100°C of at least 74 percent as measured by ASTM D 1054 and said Healy rebound value is higher than the Healy rebound value of said second rubber compound.

2. The pneumatic tire of claim 1 characterized in that each pressure distribution groove has a width in the axial direction ranging from 0.5 to 1.5 percent of the tread width.

3. The pneumatic tire of claim 1 characterized in that said second rubber compound has a tear strength value of from 140 $KNm^{-1}$ to 200 $KNm^{-1}$.

4. The pneumatic tire of claim 1 characterized in that said third rubber compound has a Healy rebound value at 100°C of from 75 percent to 95 percent.

5. The pneumatic tire of claim 1 characterized in that said third rubber compound has a tear strength value of from 70 $KNm^{-1}$ to 100 $KNm^{-1}$.

6. The pneumatic tire of claim 1 characterized in that at least 40 $KNm^{-1}$ separates the tear strength value for the second rubber compound and the third rubber compound.

7. The pneumatic tire of claim 1 characterized in that said second rubber compound has a tear strength value of from 145 $KNm^{-1}$ to 165 $KNm^{-1}$.

8. The pneumatic tire of claim 1 characterized in that the third rubber compound has a tear strength value of from 80 $KNm^{-1}$ to 95 $KNm^{-1}$.

9. The pneumatic tire of claim 1 characterized in that the second rubber compound has a Healy rebound value of from 60 percent to 75 percent and at least 5 percent separates the Healy rebound value for the second and third rubber compound.

10. The pneumatic tire of claim 1 characterized in that the first rubber compound has Healy rebound value at 100°C ranging from about 75 to 95 percent.

11. The pneumatic tire of claim 1 characterized in that the first rubber compound has Healy rebound value of from 5 to 16 percent higher than the third rubber compound.

FIG-1

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A | EP-A-0 341 187 (THE GOODYEAR TIRE & RUBBER CO.)<br>* page 3, column 3, line 44 - line 57; claims; figures *<br>* page 3, column 4, line 5 - line 21 *<br>--- | 1 | B60C1/00<br>B60C11/00<br>B60C11/18 |
| A | EP-A-0 105 822 (THE GOODYEAR TIRE & RUBBER CO.)<br>* claims; figures; tables *<br>--- | 1 | |
| A | EP-A-0 427 417 (BRIDGESTONE CORP.)<br>* claims; figures *<br>* page 3, line 49 - page 4, line 14 *<br>--- | 1,2 | |
| A | US-A-4 319 620 (R.KNILL)<br>* claims; figures *<br>--- | 1 | |
| A | PATENT ABSTRACTS OF JAPAN<br>vol. 9, no. 297 (M-432) (2020) 25 November 1985<br>& JP-A-60 135 309 (OOTSU TIRE K.K.) 18 July 1985<br>* abstract *<br>--- | 1 | TECHNICAL FIELDS SEARCHED (Int.Cl.6)<br><br>B60C |
| A | EP-A-0 234 303 (THE FIRESTONE TIRE&RUBBER CO)<br>* tables *<br>--- | 1 | |
| A | EP-A-0 242 432 (GOODRICH CO.)<br>----- | 1 | |

The present search report has been drawn up for all claims

| Place of search | Date of completion of the search | Examiner |
|---|---|---|
| THE HAGUE | 3 April 1995 | Baradat, J-L |

EPO FORM 1503 03.82 (P04C01)